Europäisches Patentamt

European Patent Office

Office européen des brevets

(11) Publication number: **0 246 927**
**A1**

# (12) EUROPEAN PATENT APPLICATION

(21) Application number: **87304606.4**

(22) Date of filing: **22.05.87**

(51) Int. Cl.⁴: **H 02 K 53/00**
**H 02 N 11/00, H 02 K 41/00,**
**F 41 F 1/02, B 65 G 54/02**

(30) Priority: **23.05.86 GB 8612674**
**02.09.86 GB 8621152**

(43) Date of publication of application:
**25.11.87 Bulletin 87/48**

(84) Designated Contracting States:
**AT BE CH DE ES FR GB GR IT LI LU NL SE**

(71) Applicant: **MAGHEMITE INC.**
**2275 Speakman Drive Unit 2**
**Mississauga Ontario L5K 1B1 (CA)**

(72) Inventor: **Cavanagh, Patrick Edward**
**95 Balmoral Avenue**
**Toronto Ontario M4V 1J5 (CA)**

(74) Representative: **Burford, Anthony Frederick et al**
**W.H. Beck, Greener & Co. 7 Stone Buildings Lincoln's Inn**
**London WC2A 3SZ (GB)**

(54) Propulsion by permanent magnets.

(57) Motion is achieved using the interaction of permanent magnets (12, 14, 20, 22) and a track (18). Stationary permanent magnets (20, 22) are positioned at various locations along the track (18) to provide a magnetic field which attracts a mobile permanent magnet (12, 14) supported for movement along the track (18). The magnetic field from the permanent magnets (20, 22) is arranged so as to be of lesser strength on the leaving side, and the mobile permanent magnet (12, 14) achieves an escape velocity from each permanent magnet (20, 22) to come under the influence of the next.

FIG. 1.

**Description**

PROPULSION BY PERMANENT MAGNETS

FIELD OF INVENTION

The present invention relates to the use of static magnet fields to achieve propulsion of magnets and achieve motion.

BACKGROUND TO THE INVENTION

We have previously described in our U.S. Patent No. 4,542,361 controlling a magnetic field to achieve useful work. That prior patent, however, requires the use of a coil-produced magnetic field to oppose the effect of the field of a static permanent magnet to permit a moving permanent magnet to approach the static one, whereupon the removal of the coil-produced magnetic field restores the field of the static permanent magnet, which then repulses the moving permanent magnet, and hence does work. However, this arrangement requires the application of electrical energy to the coils.

SUMMARY OF INVENTION

In accordance with the present invention, permanent magnets are employed to achieve motive force without the necessity for the use of electrical energy to generate opposing magnetic fields. In the present invention, motion is generated from at least one stationary permanent magnet and mobile stationary magnet means supported on a track. Each such stationary permanent magnet is arranged in relation to the mobile permanent magnet means and the track to produce a magnetic field which attracts and causes movement of the mobile permanent magnet means along the track to a location relative to the stationary permanent magnet where the attractive force on the mobile permanent magnet means is greatest and velocity thereby induced in the mobile permanent magnet means tends to move the mobile permanent magnet means along the track past the location. The stationary permanent magnet also is arranged relative to the mobile permanent magnet means and the track such that, as the mobile permanent magnet means moves past the location, the field exerted by the stationary permanent magnet on the mobile permanent magnet means is of less strength than that exerted as the mobile permanent magnet means approaches the location.

By providing a decreased magnetic field on the leaving side of the stationary permanent magnet as compared to that on the approaching side, a net increase in the velocity of the mobile permanent magnet can occur. By arranging a plurality of such permanent magnets at spaced intervals along the track, the mobile magnet may move along the track from one end to another

In one embodiment of the invention, the stationary permanent magnets have a fixed location relative to the track and are arranged with their poles providing a magnetic field which is greater on the approaching side than on the leaving side.

In another embodiment of the invention, the stationary permanent magnets are arranged to impact the mobile permanent magnet at the above-defined location and either the stationary magnet is picked up by the mobile permanent magnet means and is carried along the track with it, or part of the mobile permanent magnet means is picked up by the stationary permanent magnet and is retained by it.

The present invention also includes an arrangement of permanent magnets and a track to achieve the method of the invention.

BRIEF DESCRIPTION OF DRAWINGS

Figure 1 is a side elevational view of an experimental unit constructed to demonstrate the principle of the invention with reference to one embodiment of the invention;

Figure 2 is a schematic end view of the device of Figure 1;

Figure 3 is a detail view of one of the movable magnets element of the unit of Figure 1;

Figure 4 is a graphical representation of results of certain tests conducted using the unit of Figure 1 and as outlined herein;

Figure 5 shows the field strengths and circumferential forces at various locations in the unit of Figure 1;

Figure 6 shows the field strength along the track above a ferrite magnet of the block of the type illustrated in Figure 2 in comparison with a neodynium magnet laid flat instead of on edge; and

Figures 7 and 8 are graphical representations of the relationship of force to distance for one magnetic wheel passing over one of the groups of magnets of Figure 1, from left-to-right in Figure 7 and from right-to-left in Figure 8.

Figure 9 contains schematic views of an arrangement of permanent magnets in accordance with one aspect of another embodiment of the invention, Figure 9A being a side view, Figure 9B being an elevation view, Figure 9C being an end view and Figure 9D being a detail view;

Figure 10 is an elevational view of an arrangement of magnets in accordance with a second aspect of another embodiment of the invention;

Figure 11 is a graphical representation of the force of attraction between magnets;

Figure 12 is an elevational view of a test apparatus to determine the force between the magnets; and

Figures 13 is an elevational view of an alternate magnet arrangement suitable for use in a rocket launcher.

## GENERAL DESCRIPTION OF INVENTION

As noted above, the present invention uses permanent magnets and their magnetic fields to achieve motive force. The magnets are arranged relative to each other and to a track.

In one embodiment of this invention, the mobile permanent magnet is provided as a rotary member or wheel which runs on the track, which determines its direction of movement, while a series of stationary permanent magnets is arranged in fixed location adjacent the track and along its length. Each of the stationary permanent magnets is arranged relative to the track, so that the magnetic field exerted thereby is stronger while the mobile magnet moves towards the stationary magnet and is of a lower value as the mobile magnet leaves the stationary magnet.

If the momentum of the magnet wheel when it reaches the maximum magnetic field of the stationary magnet is sufficiently high that the mobile magnetic wheel can escape from the field of the permanent magnet, then the magnetic wheel passes on along the track towards the next stationary magnet. The track on which the mobile magnet wheel runs prevents the magnet wheel from following the hyperbolic path towards the stationary magnet that it would otherwise naturally assume.

It is the reaction by the earth to the downward force of the magnet wheel on the track as it attempts to follow the magnetic field of the stationary magnet which causes the magnet wheel to move on towards the next fixed magnet. In essence, energy is transferred from the earth, through the stationary magnet, to the magnet wheel.

If a second stationary magnet is located in relation to the track so that the magnet wheel, having escaped the first stationary magnet, is attracted by the second stationary magnet before it comes to a stop, then the process of attraction and escape, as described above for the first stationary magnet, is repeated. A series of stationary permanent magnets located along the track can cause the magnet wheel to continue to move along the whole track.

The interaction of the magnetic field of the mobile magnet with the shaped fields of the stationary permanent magnets, therefore, produces work, which is translated into motion of the mobile magnet along the track. No other external force is required, since the reaction effect of the earth provides the energy to achieve the motion.

Depending on the relative positioning of the stationary permanent magnets and their strength, the motion may be translated into an overall substantially constant speed or an overall acceleration, the choice depending on the application.

In another embodiment of the invention, the mobile permanent magnets do not pass by the stationary permanent magnets but rather impact with them. The principle of operation is the same as in the first embodiment described above, namely by providing a magnetic field of lesser strength on the leaving side of the stationary magnet, in this case of no strength, than on the approaching side, motion along a track is achieved.

The principles of this invention can be employed for a wide variety of purposes where motion between two locations is required. So long as the velocity attained by the moving magnet at the point of maximum acceleration with respect to any particular fixed magnet is sufficient to escape that magnet and the moving magnet comes under the influence of the next fixed magnet before it stops, then continuous motion is achieved.

For example, four magnet wheels may be provided on axles mounted to a load supporting surface and running on parallel horizontal tracks having fixed magnets arranged in association therewith in the manner described above.

Among the many possible applications are small systems for the transportation of materials around a factory, small trains such as are used in airports, and in electromagnetic rocket launchers.

The use of the principles of the present invention is limited by the necessity to accelerate an object entering the system to more than the escape velocity. If the load applied to any particular mobile unit exceeds that which enables the required acceleration to be achieved, then the unit will stop.

If desired, the stationary permanent magnets may be provided with increasing magnetic field strength in the direction of movement, which would result in continuing acceleration, which is useful, for example, in the rocket launcher application mentioned above.

Once the mobile unit is in motion on the track and is subsequently stopped, the mobile unit cannot initiate motion itself and continue on its journey. In most practical applications of the principles of the present invention, therefore, some motive force application means is required initially to accelerate the mobile unit from a dead stop, so that it can continue on its journey.

## DESCRIPTION OF PREFERRED EMBODIMENTS

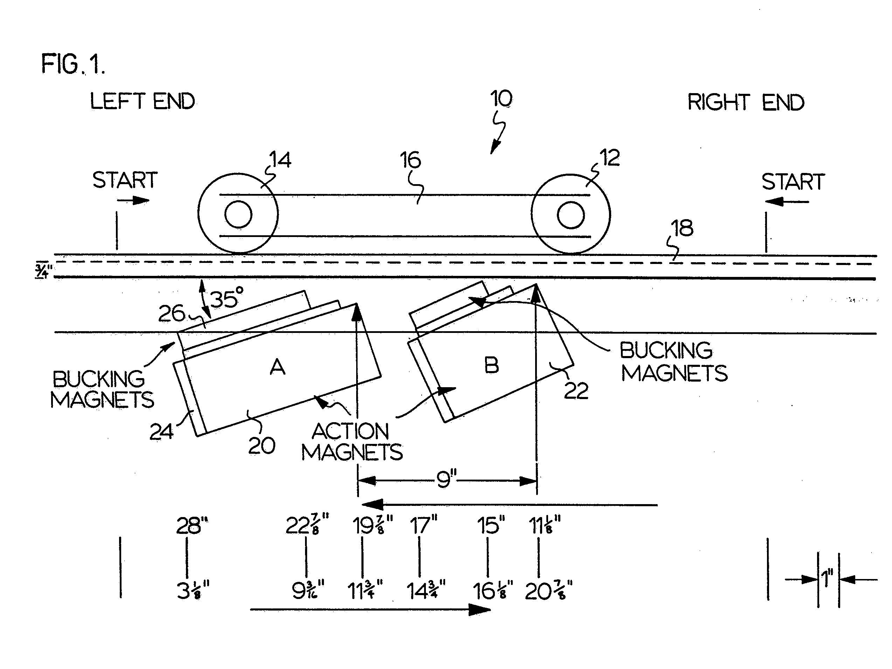

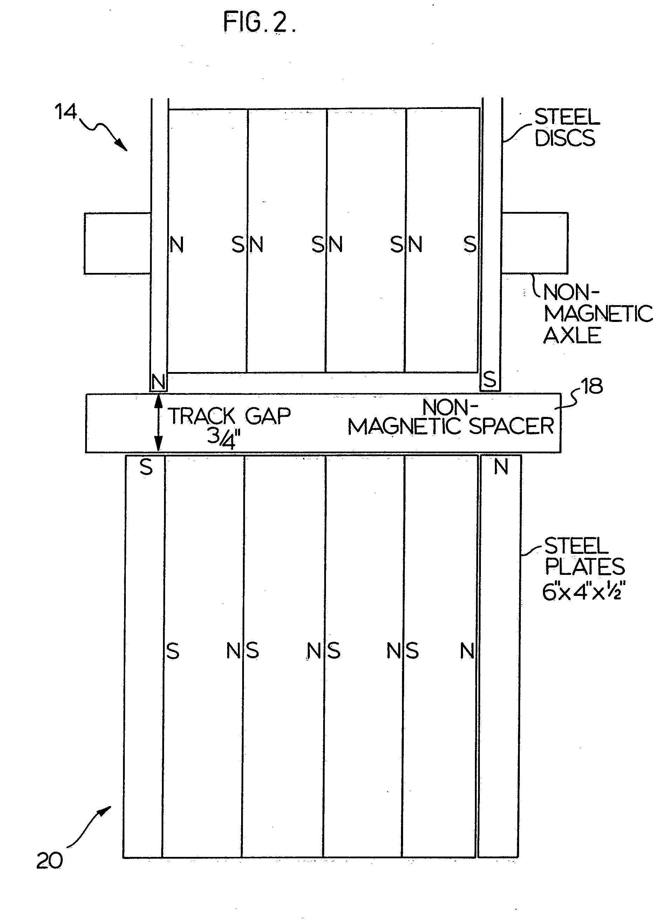

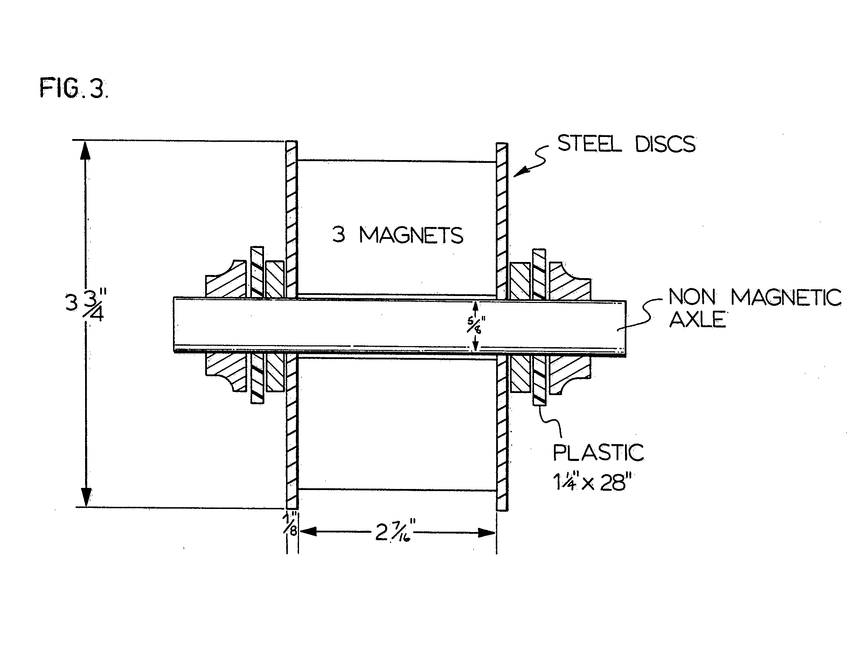

Referring to Figures 1 to 5 of the drawings, two magnet wheels 12, 14 of the type shown in detail in Figures 2 and 3 were mounted in a frame 16 to form a "chariot" 10 in which the spacing between the two magnet wheels could be varied from a minimum at which the chariot would move to an optimum determined by the load to be accelerated, the magnet sizes and field strengths and initial acceleration and resulting velocity of the chariot when it enters the magnetic field of the first fixed magnet.

The distance of travel of the chariot was determined for a series of spacings for different thicknesses of a horizontal track 18 on which the chariot 10 was supported and a fixed spacing of two stationary permanent magnets 20 and 22. Results for movement commencing from the right-hand side as seen in Figure 1, were compared to those for movement commencing from the left-hand side as seen in Figure 1. The construction of the stationary magnets 20 and 22 and the interrelation of the poles of the stationary magnets and the magnet wheels 12 and 14 are shown in Figure 2.

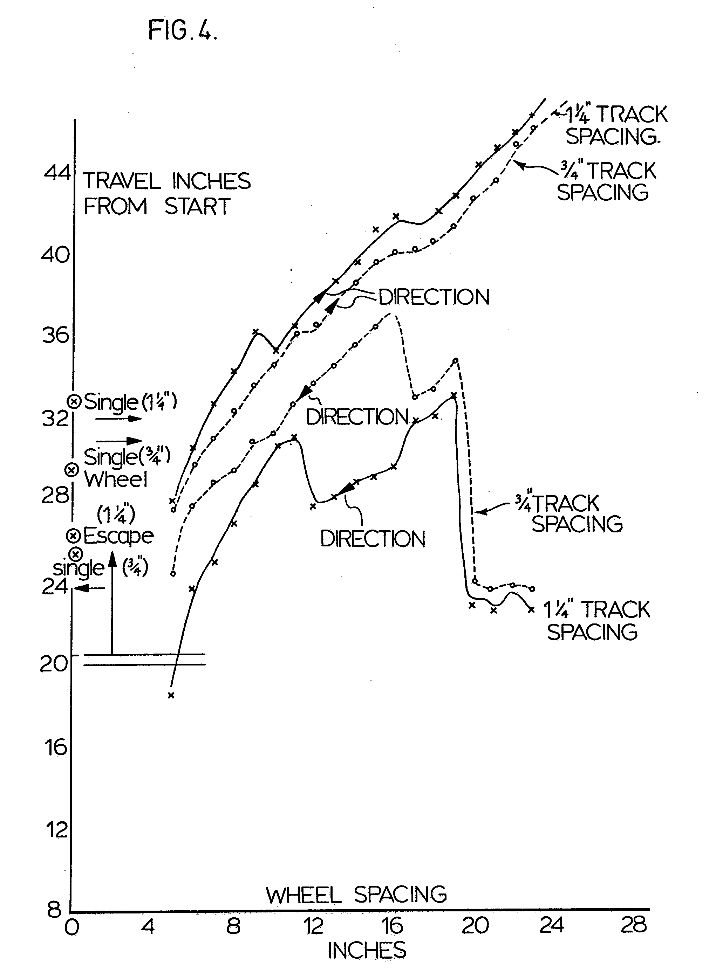

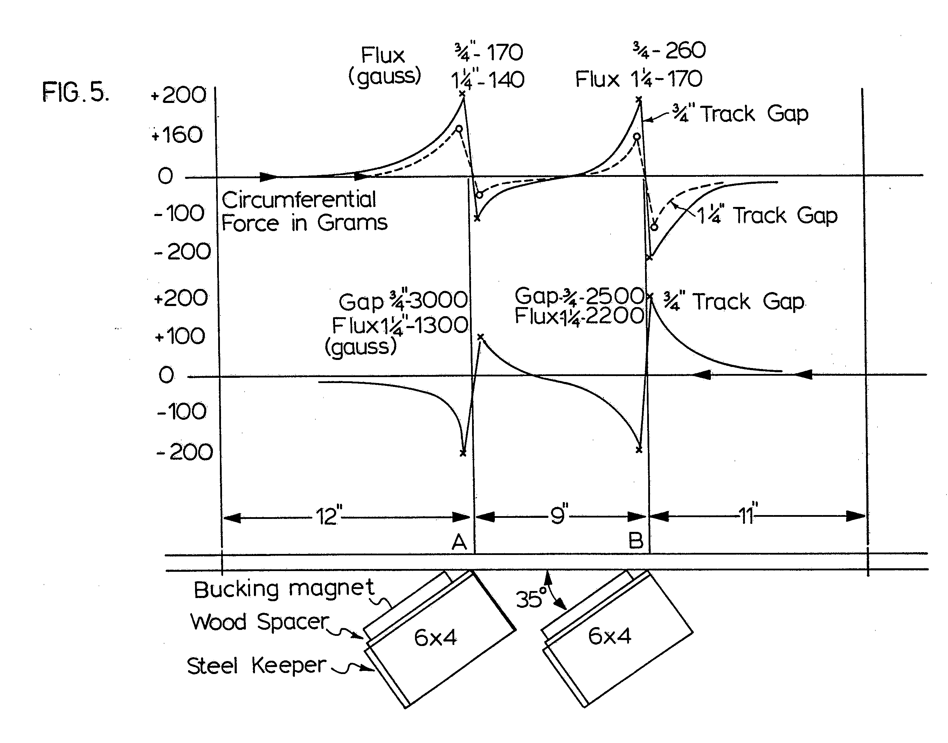

The results obtained were plotted graphically and appear in Figure 4, with details of the individual experiments being indicated thereon. The magnetic field strength and the circumferential force at various locations along the track also were determined and are shown in Figure 5.

The magnetic fields of the stationary magnets 12 and 14 were concentrated by using steel plates to gather the magnetic flux from the whole surface of the four 6″ x 4″ x 1″ magnets employed and to concentrate it at one corner of the magnet at an increased flux density.

The rectangular stationary permanent magnet arrangement 12, 14 was mounted at an angle to the horizontal track 18, so that the field approaching the peak value from the right-hand side, as seen in Figure 1, increases more rapidly than the field on the left-hand side of this peak decreases. The rectangular nature of the magnets as well as the smaller angle subtended by the long side of the stationary magnet to the horizontal track 18 than the larger angle subtended by the short side of the stationary magnet to the horizontal track, produce this effect. The effect may be further augmented by the use of a keeper 24 across the bottom end of the four 6″ x 4″ x 1″ permanent magnet assembly.

A further modification to the magnetic field provided by the stationary magnets 20, 22 may be achieved by using blocking or bucking magnets 26 on the long face of the assembly nearest the track 18. These magnets 26, with poles attracting the poles of the stationary magnet 20, 22, divert part of the field so that the strength of the magnetic field acting on the magnet wheel 12, 14 on the chariot 10 is significantly decreased on the escape side of the magnet.

As may clearly be seen from the graphical data presented in Figure 4, where the chariot 10 is travelling from left to right as seen in Figure 1, more energy is acquired than the same chariot 10 travelling in the opposite direction over the same set of magnets.

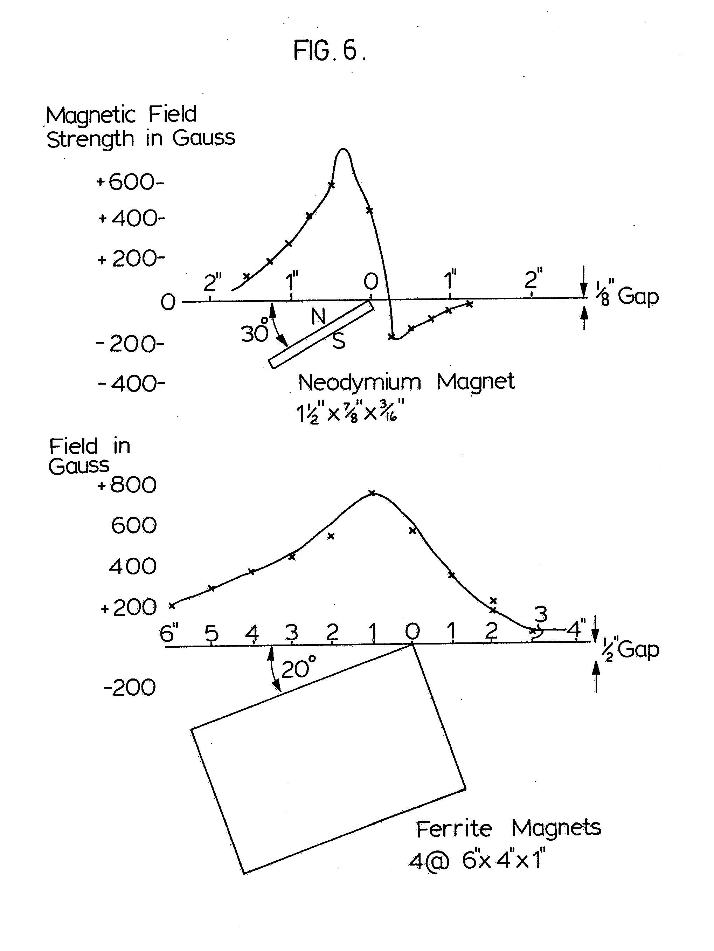

As seen in Figure 6, in contrast to the field produced by the ferrite magnets, the extremely strong south pole of the neodynium magnet laid flat establishes a field to the right of the zero point which opposes the field of the moving wheel and, therefore, repels it, thereby adding to the resulting wheel momentum. Such magnets may be employed in this invention.

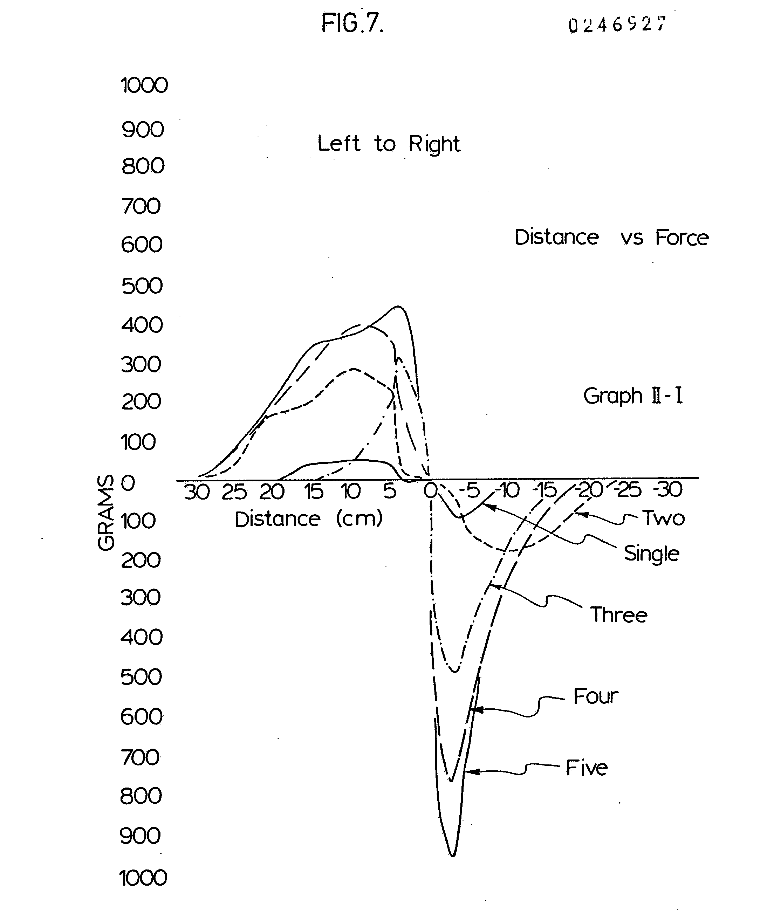

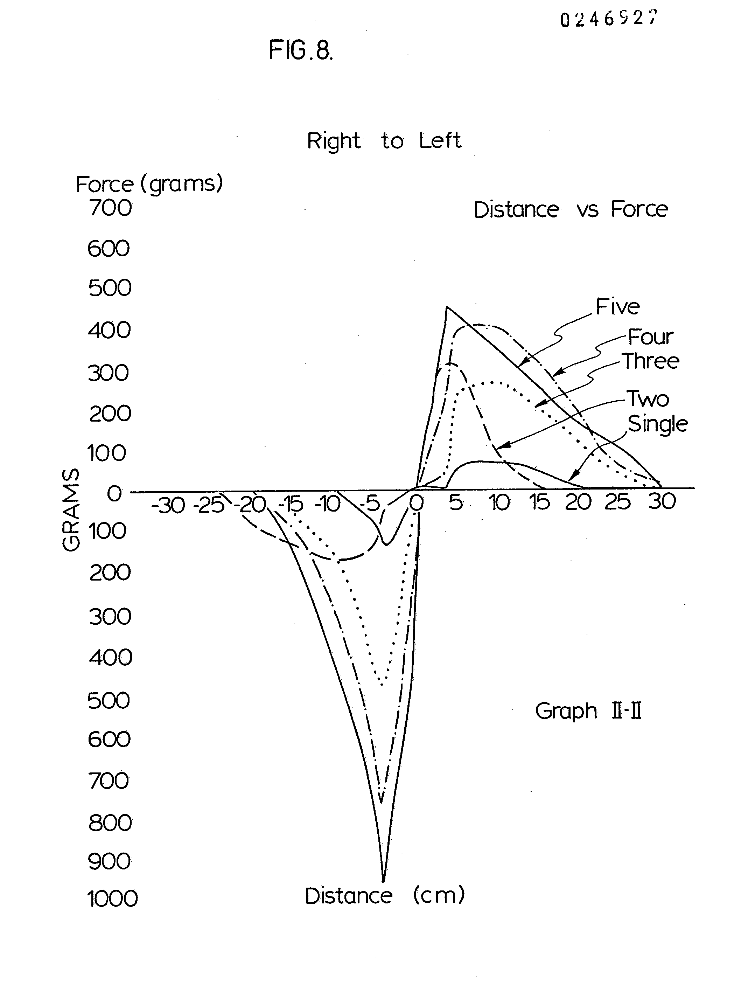

The force tests illustrated graphically in Figures 7 and 8 were effected by winding a string around a magnet wheel of the type shown in Figures 2 and 3 and using a spring balance to measure the force at various locations of the wheel above a magnet assembly as seen in Figures 1 and 2. In Figure 7, the wheel is moving from left to right while, in Figure 8, the wheel is moving from right to left. The resulting torque is the measured force multiplied by the diameter of the wheel.

The results of these tests demonstrate that the difference between the magnetic field during the approach to the peak of the magnet and the departure from the same point.

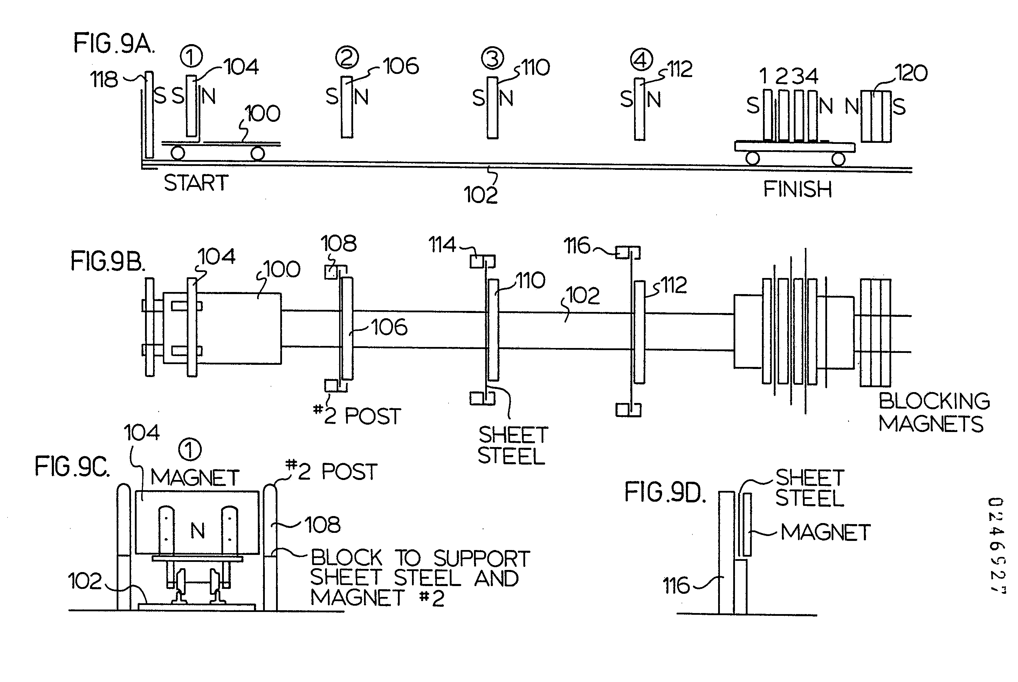

Turning now to Figure 9, there is illustrated therein an embodiment of the invention wherein impact between magnets is used. As seen therein, a cart 100 is arranged to move on a track 102.

A permanent magnet 104 is set on the cart 100 . A second identical permanent magnet 106 is placed at the distance where its attractive force starts the cart 100 in motion and accelerates it towards the stationary permanent magnet 106. When the cart 100 reaches the location of the stationary magnet 106, the mobile magnet 104 carried by the cart impacts the magnet 106 and removes it from its support 108, carrying it along with the cart 100. Additional stationary permanent magnets 110 and 112 are provided along the track 102. The process described with respect to stationary magnet 106 then is repeated, for each of the stationary permanent magnets 110 and 112 with their respective supports 114 and 116 being spaced further apart at each contact. If three stationary track magnets are used, as illustrated, then the cart 100 leaves the last of the three stationary magnets with four magnets on board, or may be seen at the location designated Finish.

An initial stationary track magnet 118 behind the cart 100, which repulses the cart to give it an additional starting impulse has been found to be useful.

When the desired velocity has been obtained, then the cart 100 can be stopped by presenting it with opposing magnets 120 to bring it to a sudden halt.

Since the mobile permanent magnet impacts the stationary magnets and carries successive ones along, the stationary magnet becomes a mobile magnet and there is no residual field that the mobile magnet needs to overcome to achieve an escape velocity.

Many shapes and sizes of permanent magnets can be utilized in the arrangement of Figure 9. One useful shape is the rectangle. If the stationary track magnets are placed at an angle to the cart magnet, then when they are picked up by the cart, they will twist to register exactly with the stationary rectangle of the cart. Use of a sheet of wax paper or other similar material that will minimize the shock of the two magnets impacting together and provide a minor degree lubrication to assist in twisting the track magnets, is preferred. It is not necessary then to space each succeeding pair of support posts 108, 114, 116 for the track magnets 106, 110, 112 further apart.

The device shown in Figure 9 and described above results in an increase in velocity with the pick-up of each stationary permanent magnet. If the ratio of field strength to weight of the permanent magnets is favourable, then the decrease in velocity resulting from picking up the mass of the new magnet is not a significant factor.

Since the field strength does not increase uniformly with the addition of extra magnets, there is a practical limit to the number of magnets which can be picked up to advantage. The result of this arrangement is maximum momentum.

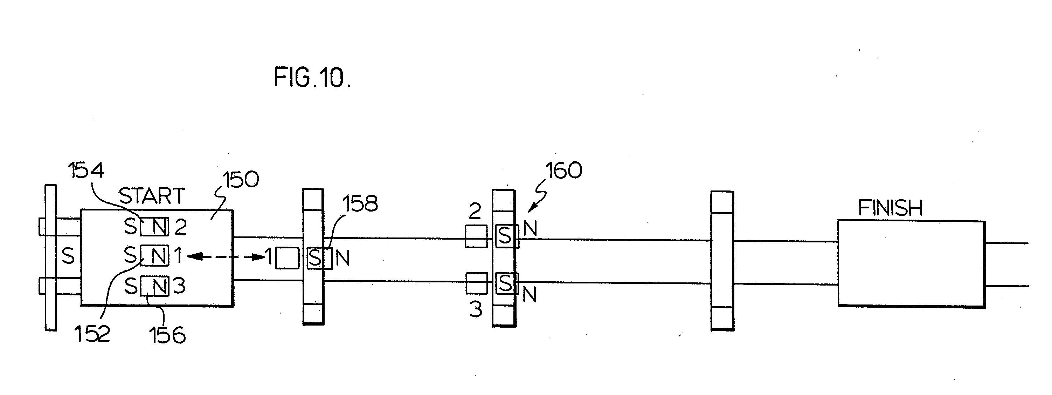

Referring now to Figure 10, cart 150 is loaded with numerous mobile permanent magnets 152, 154, 156. Stationary permanent track magnets 158, 160 are so supported and spaced that they pick off the mobile permanent magnets riding on the cart 150 one by one, or in pairs. Using this procedure, the cart 150 becomes lighter with each loss of a mobile permanent magnet, which results in a higher acceleration, and higher final velocity for the same set of conditions as those employed in Figure 9.

In the arrangement of Figure 10, the mobile permanent magnets at each stationary permanent magnet location become stationary and there is no residual field to be overcome to achieve an escape velocity from the impacted stationary permanent magnet.

In each of the arrangements of Figure 9 and 10 it is an advantage to provide a complete magnetic circuit between the cart magnets and the stationary track magnets. A pair of magnets with a steel backing on the cart, when contacting a pair of track magnets with steel backing, establishes a complete magnetic circuit between the two pairs of magnets and their steel backing.

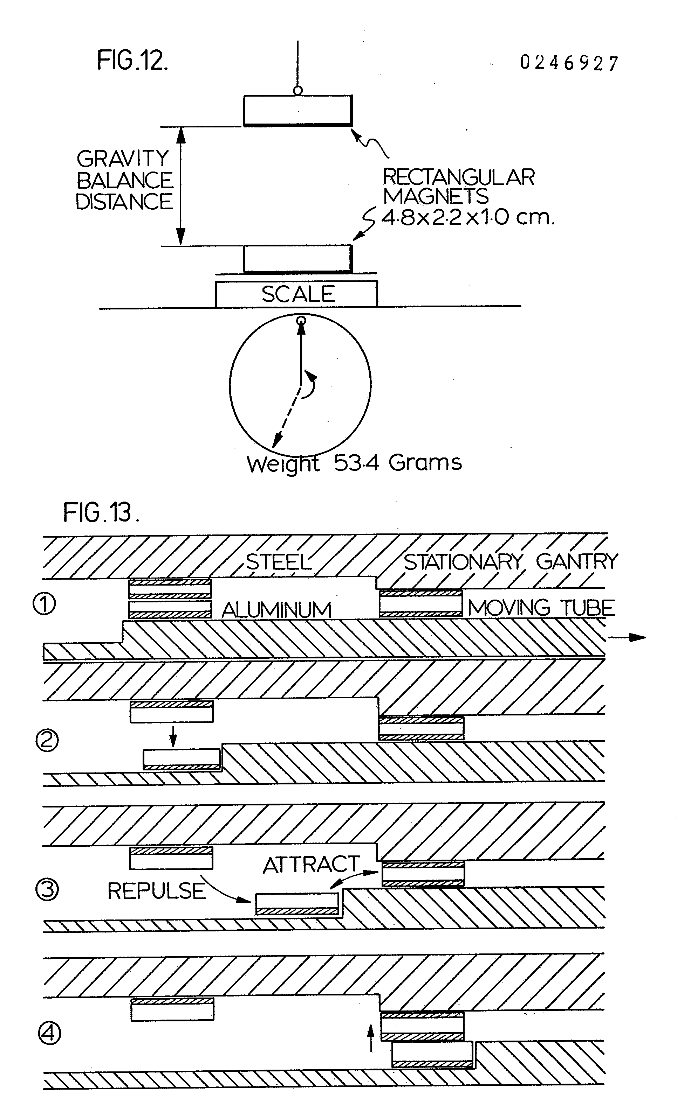

The operations depicted in Figures 9 and 10 may be combined into a procedure wherein the carrier is accelerated through the utilization of the attractive force between the magnet picked up and the stationary magnet ahead of it and then the magnets picked up are removed from the carrier by the stationary magnets. The terminal velocity, kinetic energy and momentum of the carrier are all increased. One system of achieving this operation is illustrated schematically in Figure 13.

The force available from a pair of permanent magnets to provide acceleration of one of them is expressed by the same formula that is used to derive acceleration and terminal velocity or escape velocity of a free falling object in a vacuum in a gravity field, namely

$F = m.a$ (#1)

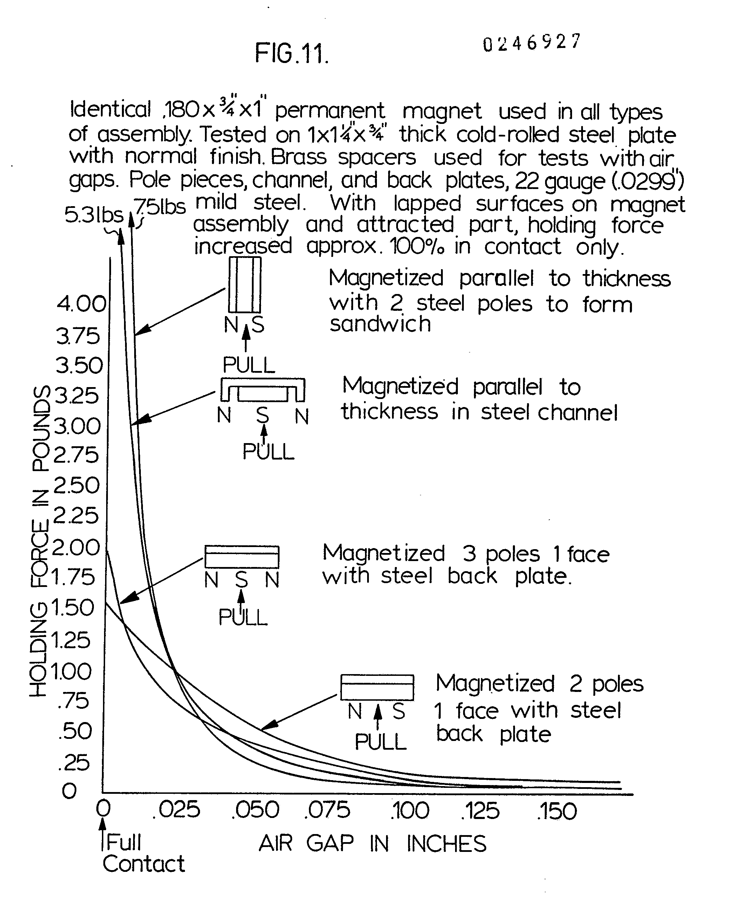

As shown graphically in Figure 11, the force of attraction between two permanent magnets varies as the square of the distance between them, in exactly the same way as force on a free falling body in a vacuum, in a gravity field.

The magnetic field between the permanent magnets can be measured by a gauss meter, which gives the number of lines of force per square centimeter between the magnets. Multiplying this measurement (gauss), by the area of magnet facing the other magnet, gives the total lines of force in the gap $\Phi$ between them.

$B_g \times A = \Phi$ (#2)

The mechanical force represented by this magnetic flux then is given by the equation:

$$F = \frac{B_g \times A \times 5.55 \times 10}{8 \pi} \qquad (\#3)$$

Knowing the mass of the moving object in the illustrated embodiments, the resulting acceleration may be calculated according to formula No.1.

If a permanent magnet is placed on a non-magnetic balance, as shown in Figure 12, then its weight can be determined. For the specific Example illustrated in Figure 12, the input is 54.3 g. An identical permanent magnet can be suspended above the scale to attract a magnet on the scale.

If the upper magnet now is lowered until the scale reads zero, then the force of the Earth's magnetic field has been balanced. Under these conditions, the magnetic force between the two magnets, therefore, is equivalent to the force of the Earth's gravity field. Measuring the distance between the two magnets, the strength of the magnetic field between them and the surface area of one magnet, a cross-check can be provided as to the accuracy of the conversion of measured magnetic field strength to mechanical force in accordance with the Formulae above.

It is also known that if an object is arranged to rise straight up, actuated by magnets spaced by less than the gravity balance distance apart for those particular magnets, then the object, for example, a rocket, is accelerated straight up.

In such a case, it is advantageous to use an arrangement of magnets such as is illustrated in Figure 10, where permanent magnets on the rising object are detached as they impact stationary permanent magnets on a supporting scaffold.

If a proper choice is made of permanent magnets for these applications, and they are somewhat protected against violent collision, then damage to the magnets is minimal and they may be reused.

Provided the residual magnetization, Br, is the same order of magnitude as the coercive force, Hc, (which indicates the difficulty of demagnetizing the magnet) then the change in magnetization of the impacted magnets is insignificant.

The utilization of the principles described herein to launch rockets or other devices using permanent magnets may be employed in a unique waste disposal system for a variety of waste materials, particularly toxic and other dangerous wastes such as nuclear wastes. In waste disposal systems, loads of such waste material are accelerated to the escape velocity required to leave the earth's gravitational field and aimed such that they fall into the sun, to be incinerated there.

Permanent magnets used in such a procedure may be discarded after a single use, if sufficiently inexpensive. It may be more economical to recover and reuse some types of magnets after remagnetizing.

Several combinations of systems can be utilized embodying the various principles disclosed herein to achieve the desired acceleration and velocity.

The acceleration by gravity of the rocket tube containing the waste material on a preliminary down hill run may be a major advantage in reaching a relatively low velocity at the chosen launching site. Acceleration due to gravity may be achieved on a permanent magnet linear accelerator track. At the launch site the rocket tube enters a launching tube to accelerate the rocket tube upward by means of permanent magnets picked up and dropped in large numbers by the rocket tube from the launching tube.

The rocket tube then would have sufficient velocity to reach an altitude where the atmosphere is thin enough that escape velocity may be reached using a minimum amount of rocket fuel.

The rocket may be aimed by firing at the appropriate time in the earth's rotation so that it would be travelling the opposite direction to the orbital velocity of the earth.

Proper choice of time, direction, and velocity results in the rocket tube falling into the sun with no further acceleration or course direction needed.

Known techniques of electromagnetic linear accelerator launching, and use of rocket fuel, to send small loads of the order of 100 pounds of waste into the sun in small rocket tubes, say, about 4 inches in diameter and 8 feet long, may be feasible at far lower costs than the present plans for permanent storage of nuclear wastes in the sea and underground.

## SUMMARY OF DISCLOSURE

In summary of this disclosure, the present invention provides a novel method of using the magnetic fields produced by permanent magnets to provide energy for moving magnetic wheels over a fixed permanent magnet track, so as to provide both motion and a significant supply of energy for usefully moving loads. Modifications are possible within the scope of this invention.

## Claims

1. A method of generating motion using permanent magnets, characterized by the steps of providing at least one stationary permanent magnet; providing mobile permanent magnet means capable of motion supported on a track; providing said track to support said mobile permanent magnet means for motion therealong; arranging each said stationary permanent magnet in relation to said mobile permanent magnet means and said track to produce a magnetic field which attracts and causes movement of said mobile permanent magnet means along said track to a location relative to said stationary permanent magnet where the attractive force on said mobile permanent magnet means is greatest and velocity thereby induced in said mobile permanent magnet means tends to move said mobile permanent magnet means along said track past said location; and arranging each said stationary permanent magnet in relation to said mobile permanent magnet means and said track such that, as said mobile permanent magnet means moves past said location, the field exerted by said stationary pemanent magnet on said mobile permanent magnet means is of less strength than that exerted as said mobile permanent magnet means approaches said location.

2. The method claimed in claim 1, cjaracterized in that a plurality of said stationary permanent magnets are arranged in spaced-apart relation to each other along the length of the track to exert magnetic fields which have a greater attractive force on their approaching side with respect to the mobile permanent magnet than on their leaving side and which enable the mobile permanent magnet means to achieve a sufficient velocity to escape the attractive influence of the magnetic field from one of said spaced-apart stationary permanent magnets and to come under the attractive influence of the magnetic field from the next-adjacent one of said spaced-apart stationary magnets in the direction of movement of said mobile permanent magnet means.

3. The method claimed in claim 2, characterized in that said mobile permanent magnet means comprises a rotary magnet positioned on said track for movement therealong and said stationary permanent magnets each comprises a permanent magnet configured and arranged below said track so that a strongly attractive magnetic field is provided towards the mobile permanent magnet means as it approaches the stationary magnet and a weakly attractive or a repulsive magnetic field is provided towards the mobile permanent magnet means as it leaves the stationary magnet.

4. The method claimed in claim 2, characterized in that said mobile permanent magnet means is mounted to a carrier positioned on said track for movement therealong and said stationary permanent magnets are positioned above the track to be impacted by said mobile permanent magnet means at each said spaced-apart location.

5. The method claimed in claim 4, characterized in that said stationary permanent magnets are arranged to be picked up and carried with said mobile permanent magnet means on said carrier at each said impact.

6. The method claimed in claim 4, characterized in that said stationary permanent magnets are arranged to remove portions of said mobile permanent magnet means from said carrier at each said impact.

7. The method claimed in claim 4, characterized in that, during a first portion of the movement of said carrier along said track, said stationary permanent magnets are arranged to be picked up and carried with said mobile permanent magnet means on said carrier at each said impact and said stationary permanent magnets are positioned to accelerate said carrier and increase its momentum, and, during a second portion of the movement of said carrier along said track, said stationary permanent magnets are arranged to remove magnets picked up during said first portion of said movement to accelerate said carrier further.

8. An apparatus, characterized by:
track means (18, 102) for supporting wheeled vehicle means (10; 100; 150) for movement of said vehicle means therealong, a plurality of stationary permanent magnets (20, 22; 106, 110, 112; 118, 160) spaced apart from one another and arranged adjacent to said track means, and mobile permanent magnet means (12, 14; 104; 152, 154, 156) supported by said vehicle means for movement therewith along said track; each said stationary permanent magnet (20, 22; 106, 110, 112; 158, 160) being located to produce a magnetic field of greater attractive force to said mobile permanent magnet means (12, 14; 104; 152, 154, 156) on an approaching side upon movement of said wheeled vehicle means (10; 100; 150) along said track than on a leaving side and of sufficient strength to impart to said wheeled vehicle means (10; 100; 150) a sufficient velocity to escape the attractive influence of the magnetic field from one (22; 106; 158) of said spaced-apart stationary permanent magnets and to come under the attractive influence of the magnetic field from the next-adjacent one (20; 110, 160) of the spaced-apart stationary magnets in the intended direction of movement of said wheeled vehicle means (10; 100; 150).

9. The apparatus claimed in claim 8, characterized in that said mobile permanent magnet means (12, 14) comprises at least one wheel of said wheeled vehicle means (10) and said stationary permanent magnets (20, 22) are arranged below said track (18) so that a strongly attractive field is provided towards said wheeled vehicle means (10) as it approaches the stationary magnet (20, 22) and a weakly attractive or a repulsive magnetic field is provided towards said wheeled vehicle means (10) as it leaves the stationary magnet (20, 22).

10. The apparatus claimed in claim 8, characterized in that said stationary permanent magnets (106, 110, 112; 158, 160) are positioned above the track (102) to be impacted by said mobile permanent magnet means (104; 152, 154, 156) mounted on said wheeled vehicle means (100; 150).

11. The apparatus claimed in claim 10, characterized in that the apparatus is configured as a rocket launcher.

# FIG.1.

LEFT END               10           RIGHT END

START →

14     16     12

18

← START

¾"

26   35°

BUCKING MAGNETS

24

A        B

20    ACTION MAGNETS    22

BUCKING MAGNETS

9"

28"     22⅞"   19⅞"   17"    15"    11⅛"

3⅛"     9¾"   11¾"   14¾"   16⅛"   20⅞"

1"

FIG. 2.

2/12

0246927

STEEL DISCS

14

N    S|N    S|N    S|N    S

NON-MAGNETIC AXLE

N    TRACK GAP 3¼"    NON-MAGNETIC SPACER    S    18

S    N

STEEL PLATES 6"x4"x½"

S    N|S    N|S    N|S    N

20

# FIG.3.

STEEL DISCS

3 MAGNETS

NON MAGNETIC AXLE

$3\frac{3}{4}$"

$\frac{5}{8}$"

PLASTIC
$1\frac{1}{4}$" x 28"

$\frac{1}{8}$"

$2\frac{7}{16}$"

FIG.4.

0246927

FIG.5.

Flux (gauss) ¾"- 170  1¼"-140

¾- 260  Flux 1¼-170

¾" Track Gap

+200
+160
O
-100
-200

Circumferential Force in Grams

1¼" Track Gap

Gap ¾"-3000  Flux 1¼"-1300 (gauss)

Gap.¾-2500  Flux 1¼-2200

¾" Track Gap

+200
+100
O
-100
-200

|← 12" →|← 9" →|← 11" →|

A        B

Bucking magnet
Wood Spacer
Steel Keeper

6x4        35°        6x4

# FIG. 6.

Magnetic Field
Strength in Gauss

+600-
+400-
+200-
0 —
-200-
-400-

2"  1"  O  1"  2"  ⅛" Gap

30°  N  S

Neodymium Magnet
1½" x ⅞" x 3/16"

Field in
Gauss
+800
600
400
+200

6"  5  4  3  2  1  0  1  2  3  4"  ½" Gap

20°

-200

Ferrite Magnets
4@ 6"x 4"x 1"

FIG.7.    0246927

Graph Ⅱ-Ⅰ

Left to Right

Distance vs Force

GRAMS

Distance (cm)

Two
Single
Three
Four
Five

## FIG.8.

Right to Left

Force (grams)

Distance vs Force

Five
Four
Three
Two
Single

GRAMS

Graph II-II

Distance (cm)

FIG.9A.

FIG.9B.

FIG.9C.

① MAGNET #2 POST

N

BLOCK TO SUPPORT
SHEET STEEL AND
MAGNET #2

FIG.9D.

SHEET
STEEL

MAGNET

FIG.10.

# FIG.11.

Identical .180 x ¾″ x 1″ permanent magnet used in all types of assembly. Tested on 1x1¼″x¾″ thick cold-rolled steel plate with normal finish. Brass spacers used for tests with air gaps. Pole pieces, channel, and back plates, 22 gauge (.0299″) mild steel. With lapped surfaces on magnet assembly and attracted part, holding force increased approx. 100% in contact only.

5.3 lbs, 75 lbs

Magnetized parallel to thickness with 2 steel poles to form sandwich

N S
PULL

Magnetized parallel to thickness in steel channel

N S N
PULL

Magnetized 3 poles 1 face with steel back plate.

N S N
PULL

Magnetized 2 poles 1 face with steel back plate

N S
PULL

HOLDING FORCE IN POUNDS

4.00
3.75
3.50
3.25
3.00
2.75
2.50
2.25
2.00
1.75
1.50
1.25
1.00
.75
.50
.25
0

0   .025   .050   .075   .100   .125   .150

Full Contact

AIR GAP IN INCHES

# FIG.12.

0246927

GRAVITY BALANCE DISTANCE

RECTANGULAR MAGNETS
5 4·8 x 2·2 x 1·0 cm.

SCALE

Weight 53·4 Grams

# FIG.13.

STEEL    STATIONARY GANTRY

① ALUMINUM    MOVING TUBE

②

③ REPULSE    ATTRACT

④

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol. 5, no. 44 (E-50)[716], 24th March 1981; & JP-A-55 166 482 (MASUZOU FUJIMOTO) 25-12-1980 * Abstract; figures 6-11 * | 1-3,8, 9 | H 02 K 53/00 H 02 N 11/00 H 02 K 41/00 F 41 F 1/02 B 65 G 54/02 |
| X | US-A-4 074 153 (BAKER et al.) * Column 2, lines 10-46; column 3, line 4 - column 4, line 15; figures 1-3,7,8 * | 1-3,8, 9,11 | |
| A | FR-E- 62 593 (RAS) * Page 1, left-hand column, lines 23-39; figures 1-5 * | 4-7,10 | |
| A | US-A-3 353 822 (DANGELMAIER et al.) * Column 2, line 32 - column 4, line 43; figures 1,2 * | 4-7,10 | TECHNICAL FIELDS SEARCHED (Int. Cl.4) |
| | | | H 02 K H 02 N F 41 F B 65 G H 01 F |

The present search report has been drawn up for all claims

| Place of search | Date of completion of the search | Examiner |
|---|---|---|
| THE HAGUE | 28-08-1987 | TIO K.H. |